# EUROPEAN PATENT SPECIFICATION

(11) **EP 2 876 863 B1**
(45) Date of publication and mention of the grant of the patent: **10.08.2016**
(21) Application number: 13306602.7
(22) Date of filing: 22.11.2013
(51) Int. Cl.: H04L 29/08

(54) **DELIVERY AND STORAGE OF CONTENT WITHIN A NETWORK**
LIEFERUNG UND SPEICHERUNG VON INHALT IN EINEM NETZWERK
STOCKAGE ET DISTRIBUTION DE CONTENU À L'INTÉRIEUR D'UN RÉSEAU

(43) Date of publication of application: 27.05.2015
(73) Proprietor: ALCATEL LUCENT, 92100 Boulogne-Billancourt (FR)
(72) Inventor: Kisel, Andrey, Cambridge, Cambridgeshire CB24 6DD (GB); Niven-Jenkins, Ben, Cambridge, Cambridgeshire CB24 6DD (GB); Crilly, Liam, Cambridge, Cambridgeshire CB24 6DD (GB)
(74) Representative: Berthier, Karine

(56) References cited:
- US-A1- 2011 153 937
- US-B1- 7 080 158

## Description

### FIELD OF THE INVENTION

The present invention relates to a method, apparatus, network and computer program for delivering content across a network.

### BACKGROUND

When delivering content across a network web caching is often used to store and deliver popular content from the Service Provider network, rather than delivering the content from the Original source of the content on the Web. Service Providers and network operators regularly deploy caching to reduce bandwidth over the peering link and improve QoE (quality of experience) for the subscribers. Content caching typically requires business relations between content owners and network operators. Content owners provide content (managed content) to the network operators, which the network operators cache and deliver to the subscribers from their own Content Delivery Networks (CDNs) often called on-net CDNs.

Transparent caching has emerged recently as a new type of caching. Transparent caching involves the interception and local storage of popular Web content, in which, requests for content and responses to the requests are intercepted and the intercepted content is stored within the transparent cache. This content can then be served from the cache instead of the content provider and this reduces the number of requests transiting across the network and any peering points to the content Origin location. By reducing demand on transit bandwidth and reducing delays, network operators can deliver better QoE especially during peak periods and reduce peering costs.

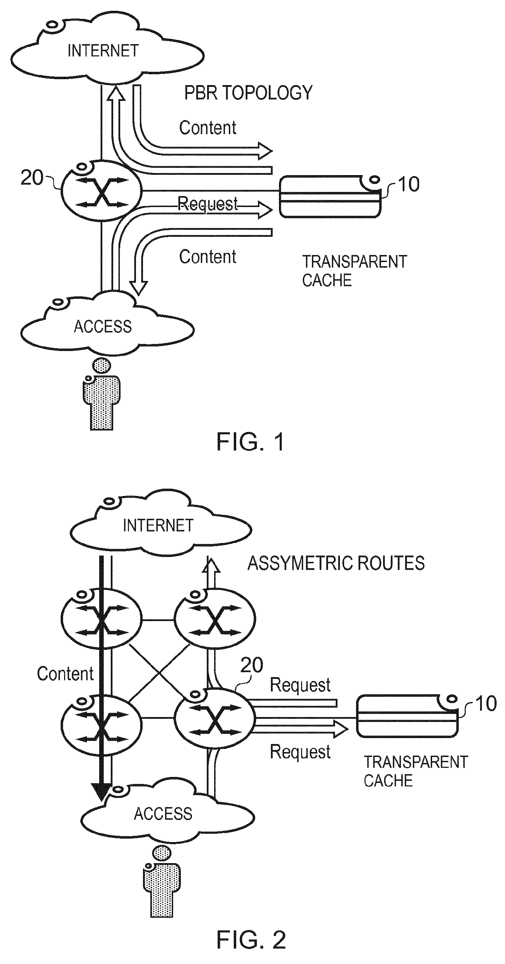

Transparent caching has the characteristics of traditional caching, for example, delivering content from locations close to the subscribers. However, the caching is 'transparent' or 'invisible' to the content owners and the subscriber. Figure 1 shows an example of transparent caching where a request for content is intercepted at a service router 20 and delivered to a transparent cache 10. If the transparent cache 10 is currently storing the content then it serves the content and if not it sends a request for the content spoofing the user to the origin server. The content is delivered in response to the request, and the content is intercepted by the service router 20 and can be stored by the transparent cache and delivered to the user.

Transparent caches are often deployed on the 'data path' using policy based routing (PBR): each user request for the content being routed to the cache and the cache either serving the request or passing it to the content Origin. In order to efficiently cache content, all packets in the content delivery flow need to be routed to the same cache. However, many modern networks have multiple paths for content delivery flow. This is called asymmetric routing and allows the request for the content to travel along a different path to at least some of the returned content. This is shown in Figure 2.

Interception of the content in systems using asymmetric routing is not straightforward as the content may not come back via the same service router or tap point that intercepted the original request. Thus, conventional transparent caching does not provide a good solution to systems that employ this sort of routing.

One alternative might be to perform semi-transparent caching in which the user request is intercepted and then amended such that it is explicitly sent from the transparent cache rather than appearing to come from the user. This means that even in an asymmetric system the responses to the request will be transmitted to the transparent cache. However, the origin server will have visibility of the address of the transparent cache and thus, if the transparent cache sends many content requests, then in systems that wish to avoid transparent caching, the origin server may well blacklist the address of the transparent cache and not respond to further requests.

US 2011/0153937 discloses a way of performing intermediary cache redirection while maintaining original source and destination IP addresses.

US7080158 discloses a caching technique where details of the cache are sent to the client such that it contacts the cache server directly to retrieve the content.

It would be desirable to be able to store and deliver content locally even in systems which route content asymmetrically.

### SUMMARY

A first aspect of the present invention provides a method of delivering content to a user, comprising the steps of: receiving at a cache server (10) an intercepted request from said user for content, said request being directed to an origin server; determining if said content is currently stored at said cache server and if so delivering said content, and if not requesting said content from said origin server; said step of requesting said content from said origin server comprising: determining whether said content from said origin will be delivered symmetrically via a same route as said request was received via or asymmetrically at least partially via a different route from a route said request was received via; and if it is determined that said content from said origin server will be delivered asymmetrically: amending said request such that a source of said request is indicated to be said cache server, and transmitting said amended request to said origin server; or if it is determined that said content from said origin will be delivered symmetrically: transmitting said request to said origin server with said source of said request indicated as being said user.

The inventors of the present invention recognised that the transparent caching of content is in many cases desirable but that in networks or delivery systems which may use asymmetric routing of content it is not straightforward. They also recognised that although the use of semi-transparent caching, where the content provider is aware of the address of the cache to which the content is being sent, may allow content to be reliably sent to the cache in the short term even in a system using asymmetric routing, it also allows the provider of the content to see the cache as the source of the request. This can lead to the cache being blacklisted and can prevent the cache from receiving content in the future.

It addresses these two problems by providing a system that can detect symmetric or asymmetric routing and can intelligently switch from a fully transparent caching mode in which the user and content provider are unaware of the cache server between them, to a semi-transparent mode where the content provider, at least, is aware of the cache server. The switching is done in dependence upon the type of routing that the system determines will occur for that content. In this way, where a fully transparent mode can reliably intercept content (symmetric routing) then this can be used. The use of the fully transparent mode where possible, reduces the number of times that the cache server is exposed to the content provider and this reduces the likelihood of the cache server being blacklisted. In this way content can be cached reliably in systems which use both symmetric and asymmetric routing. It should be noted that in some embodiments the router will route requests to the cache server by diverting the requests to the cache server, while in other embodiments it may mirror the requests to the cache server, such that the request is transmitted to the origin server and a copy of the request is transmitted to the cache server.

It should be noted that the origin server is the server storing the content requested, and this may take a number of forms, for example it may be a website.

In some embodiments, said step of determining whether said content from the origin server is delivered symmetrically or asymmetrically, comprises transmitting said received request to said origin server and in response to not receiving at least some of said content as intercepted content at said cache server determining that said content from said origin server is delivered asymmetrically.

Where there is asymmetric routing of content then at least some of the content may not travel back to the user via the same route as the request and thus, may not pass an interception point where a service router for example detects the content and routes it to the cache server. If the content does not pass this point it simply travels to its destination address which is the user (as the cache server will have sent the request as though it came from the user) and the cache server will never receive this part of the content. Thus, if the cache server monitors ingress and egress traffic for example, any mismatch between requests and responses will indicate asymmetric routing. When such routing has been detected the cache server can select semi-transparent caching for the request such that the request for the content is amended to come from the cache server itself, and therefore any response to the request is directed to the cache server.

In some embodiments, said step of determining whether said content from said origin server is delivered symmetrically or asymmetrically, is determined in dependence upon at least one of said content and said origin server.

It may be that networks generally route content asymmetrically or route particular content asymmetrically from a particular origin server, while from other servers the network may always route content symmetrically. Thus, in some cases the cache server may be able to determine whether the routing is to be symmetrical or asymmetrical from the origin server and/or the content.

In some embodiments, said step of determining whether said content is delivered from said origin server symmetrically or asymmetrically, comprises comparing said origin server characteristics such as IP address, name or other with a plurality of origin server's characteristics stored in a list of origin servers on said cache server.

In some cases a list of origin servers which are known to create network routing of certain content in a certain way is stored on the cache server, such that whether the request should be sent in a fully transparent or semi-transparent mode can be determined from a comparison of the origin server with the list. This list may be generated by the cache server itself having first determined the type of network routing generally observed from particular origin servers.

In some embodiments, the method comprises an initial step of: intercepting said user request directed to said origin server; determining whether said user request is to an origin server that serves static content; and if so routing said user request to said cache server.

One further way of reducing the number of times the cache server requests content in a semi-transparent way is not to route all requests to the cache server. In this regard, the interception point may not be able to make judgements regarding the content, but it will be able to determine the destination, thus, it can be configured to route user requests to servers that serve static content that is likely to be cacheable to the cache server, while requests to servers that serve dynamic content such as for example facebook® servers are not intercepted and redirected in this way.

In some embodiments the method comprises the further step of prior to requesting said content from said origin server, determining if said content of said request is content to be stored in said cache server and if it is, performing said steps of requesting said content from said origin server, and if it is not, not performing said steps.

The cache server may not store all content requested, for example it may determine which content to cache in dependence upon a property of the content such as how popular the content is. If the content requested is not content that is to be cached, then the method may determine not to request the content from the cache server but simply to transmit the user request in the usual way. In this way, the number of requests that can be seen by the origin server to stem from the cache server are reduced. This reduces the number of times the address of the cache server is exposed to the origin server and reduces the likelihood of it being blacklisted. In this regard where the intercepted request is mirrored to the cache server, then it is quite straightforward to simply not request the content from the cache server as the content request from the user will have been transmitted to the origin server and the content will be directly served by the origin server in response to this. Where the request has been redirected to the cache server, then this request needs to be transmitted further, but it should not be amended to appear to come from the cache server.

In some embodiments the method comprises the further steps of: receiving said content either as intercepted responses to said request directed to said user or as a response to said request directed to said cache server; determining whether said content is popular content and if so storing said content. The stored content may then be transmitted to said user.

The cache server may determine before requesting the content whether it is to store it or not and only request content that it intends to store, alternatively it may request all content that it has received requests for, either by spoofing the user in the request or amending the request to come from itself and then having received the content it may decide at this point whether to store it or not, that decision being based on things such as the current available storage space in the cache server and the popularity of the content. In this regard the system may determine that the local storage and delivery of content should be performed for popular content that is often requested as this will reduce traffic across the network and peering points significantly. The additional overheads of local storage may not be merited for content that is requested less often.

In some embodiments said user and said cache server are connected via a local network and said origin server is located outside of said local network.

Where the origin server is remote from the user, then storing the content locally on a locally located cache server reduces the time and network resources required to deliver the content, this improves performance particularly where the content is popular content often requested from users within the local network.

A second aspect of the present invention provides a computer program which when executed by a computer controls said computer to perform the steps of a method according to a first aspect of the present invention.

A third aspect of the present invention provides a cache server for storing content to be delivered to a user, said cache server comprising: data storage circuitry for storing content to be delivered to said user; an input for receiving intercepted requests from a user for content, said requests being directed to an origin server; determining logic configured to determine whether said content to said origin server will be delivered symmetrically via a same route as said request was received via or asymmetrically at least partially via a different route from a route said request was received via; and requesting logic configured to request said content from said origin server by: amending said request such that a source of said request is indicated to be said cache server, and transmitting said amended request to said origin server, if said determining logic has determined that said content from said origin server will be delivered asymmetrically: or by transmitting said request to said origin server with said source of said request indicated as being said user if said determining logic has determined that said content from said origin server will be delivered symmetrically.

Providing a cache server that can intelligently decide whether to act in a fully transparent or semi-transparent mode in dependence upon whether the requested content will be delivered with symmetric or asymmetric routing enables content to be reliably intercepted and cached irrespective of the routing choices by the underlying network while reducing the number of occasions that the cache server is exposed to the content provider.

In some embodiments said cache server comprises caching logic configured to determine whether content requested is content that should be stored in said cache server and if not said cache server is configured to discard said request and not to transmit said request further.

A further way of reducing the exposure of the cache server to the content provider is to only send requests for content from the cache server where the content is to be cached. Thus, for non-cacheable content the request is simply discarded and content will not be provided to the user via the cache server. This works particularly well where the device intercepting the request mirrors the request to the cache server and transmits the original request to the origin server at the same time. In this case discarding the request at the cache server simply discards what is a duplicate request, such that the content will still be delivered from the origin server. It should be noted that where the request is mirrored such that two requests are sent in parallel, one via the cache server, then only one of them delivers the content as the first one to respond to the user is the one that sets up a session and delivers the content while the next one to respond will be discarded by the user and will terminate.

In some embodiments, said determining logic is configured to transmit said received intercepted requests to said origin server and in response to not receiving at least some of said content at said cache server to determine that said content from said origin server is delivered asymmetrically.

Alternatively and/or additionally said determining logic is configured to determine whether said content from the said origin server is delivered symmetrically or asymmetrically in dependence upon at least one of said content and said origin server. In some embodiments said cache server comprise storage logic configured to determine in response to receipt of said request whether said content is currently stored and if so to deliver said content to said user and not to transmit said request further.

The cache server stores content locally and thus, it serves the content to the user in response to a request if it determines it is currently storing the content. In this way once stored the content does not need to be requested from the origin server again, so that the cache server is not repeatedly exposed to the origin server while retrieving the same content multiple times.

A fourth aspect provides a content delivery network comprising a network for connecting at least one user with a further network providing access to a plurality of origin servers, said content delivery network comprising: at least one router for routing requests received from said at least one user to said further network; and a cache server according to a third aspect of the present invention, for storing content; wherein at least one of said at least one routers is configured to receive requests for content from said at least one user and to route at least some of said requests to said cache server, and to receive content directed to said at least one user and to route at least some of said content to said cache server.

Storing content in a cache server on a local network reduces the number of times the local network needs to contact a further network, which reduces delay and data traffic and can reduce costs, where there are costs associated with accessing the further network perhaps via peering points. However, with delivery networks that typically have multiple delivery paths, then the plurality of paths may result in asymmetric routing to be used for the delivery of content in some cases. Providing a network according to a fourth aspect of the present invention enables content that is routed both symmetrically and asymmetrically to be reliably routed to a cache located locally

A further aspect of the present invention provides a computer program product for storing a computer program which when executed by a computer controls said computer to perform the steps of a method according to a first aspect of the present invention.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the interception of content requests and the diversion of these requests to a transparent cache;
Figure 2 illustrates a similar system to Figure 1 where asymmetric routing occurs;
Figure 3 shows a network for routing requests to a transparent cache according to an embodiment of the present invention;
Figure 4a shows a network for routing requests to a transparent cache according to a further embodiment of the present invention;
Figure 4b shows a network for routing requests to a transparent cache according to a further embodiment of the present invention; and
Figure 5 shows a flow diagram illustrating steps in a method of routing user requests for content according to an embodiment of the present invention

### DESCRIPTION OF THE EMBODIMENTS

### Overview

Before discussing the embodiments in any more detail, first an overview will be provided.

The present technique suggests a novel approach for transparent caching of content in networks with asymmetric routing. The basic idea is to modify the transparent cache to detect asymmetric routing and intelligently switch from a fully transparent to semi-transparent mode to acquire and cache the content from the website or web locations to which asymmetric routing has been detected.

In a fully transparent mode, the cache uses the client IP address as a source IP address for outgoing traffic. In this way, the cache IP address is not exposed in this fully transparent mode and the website or origin server cannot easily detect whether there is a caching server. In semi-transparent mode, the cache uses its own IP address as a source IP address for the out going traffic. This means that where asymmetric routing occurs the destination for the content is the cache and, thus, all packets are received independent of their route. However, the website or content origin has visibility of the address of the cache server. By determining whether symmetric or asymmetric routing will be used and only using the semi-transparent mode for asymmetric routing, the number of requests that come from the IP address of the cache are reduced and it is therefore less likely that the content origin will determine that this address belongs to a caching server.

In some cases requests are only routed from the caching server to the origin where the content is cacheable content. This again reduces the number of times the address of the caching server is exposed to the origin.

In this way, by intelligently switching to a semi-transparent mode to acquire content where it is deemed to be cacheable, not currently in the cache and delivered by asymmetric routing, and using a fully transparent mode in other cases, the content can be retrieved reliably while not exposing the cache IP address unnecessarily. Once the content has been cached the cache serves the content from the cache.

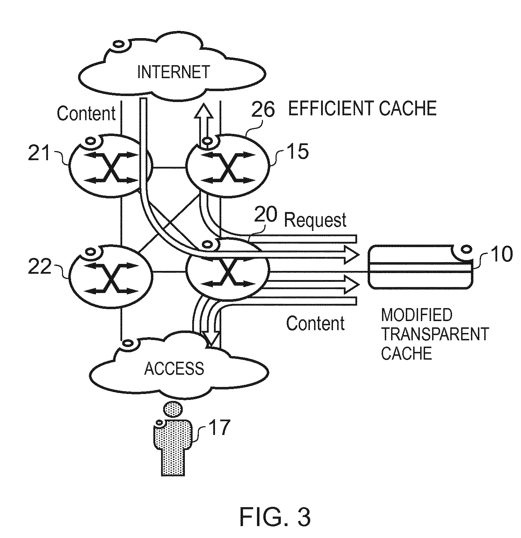

Figure 3 shows a cache 10 according to an embodiment of the present invention. Cache 10 is connected to a network 15 which connects user 17 to the Internet and from there to the servers of various content providers. Within the network 15 there are service routers 20, 22, 24 and 26 which route user requests based on various policies that they may be programmed with. In this case, service router 20 is programmed to intercept user requests to certain origin servers and direct them to the cache 10. Cache 10 will then determine whether the request it receives is for content that will be routed symmetrically or asymmetrically. If it determines it is for content that will be routed asymmetrically, then it will amend the request such that the address for the request is the IP address of the cache. In this way, when the content is returned, it is returned to this address and any asymmetric routing does not affect its arrival at the cache. Cache 10 will then store the content and deliver it to user 17.

If cache 10 determines that the content will be delivered symmetrically, then it will spoof the user request and transmit this request to the origin server. The origin server will respond by transmitting the content to the user, and service router 20 will intercept it and transmit it to the transparent cache where it will be stored and can be delivered to the user 17.

If cache 10 had determined on receipt of the request that it already stored the content, then it would not have transmitted the request any further; it would simply have served the content to the user.

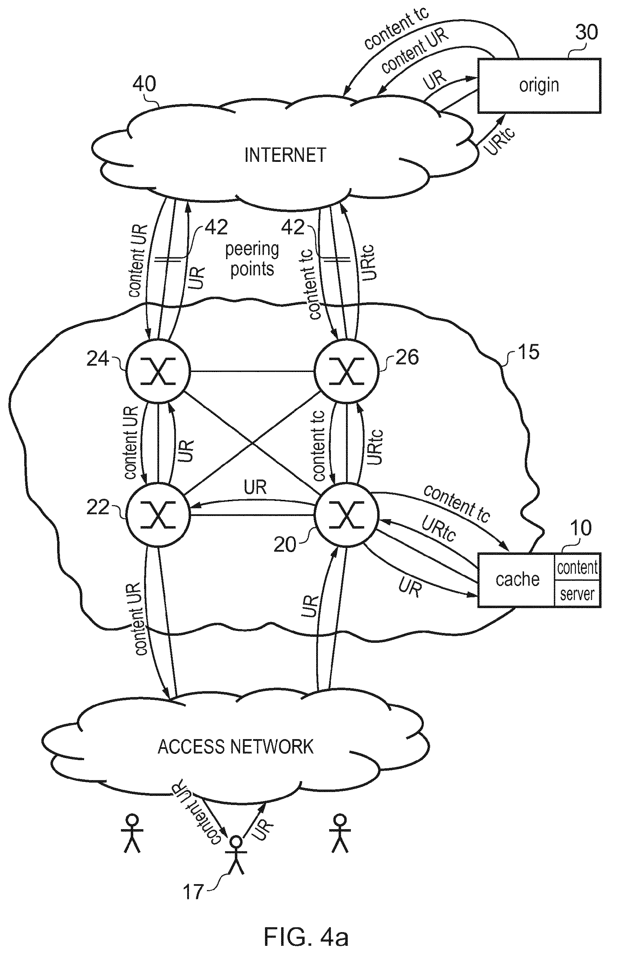

Figure 4a shows an alternative embodiment where several users including user 17 are connected via an access network 18 to a local network 15 which connects with the internet 40 via peering points 42. Sending data traffic across the peering points is expensive for the owner of the local network 15. It is therefore advantageous if the amount of traffic across these peering points can be reduced. With this in mind, local caching of content within network 15 is done for popular content, thereby improving both the quality of experience for the user and reducing the costs and the data traffic for the network owner.

In this embodiment, user 17 transmits a user request via access network 18 to network 15. This user request UR is received at service router 20, which in this embodiment mirrors it such that it is transmitted towards origin server 30 and yet a mirrored version of it is transmitted to cache 10. Thus, there is a mirrored request UR that goes from service router 20 to cache 10 and the original request that goes from service router 20 towards the origin server, via in this case service router 22, service router 24 peering point 42, across Internet 40 to the origin server 30. Service router 22 is not configured to divert requests or content to cache 10 and thus, any content or requests that are sent asymmetrically though this router and not via service router 20 will not arrive at cache 10.

The user request received at cache 10 is examined by cache 10 to determine whether or not the cache is currently storing the content. If it is, it will deliver the content to the user. In this case it is not, so it determines whether the content is to be delivered symmetrically or asymmetrically. In this example, the cache examines the content requested and the server and from a stored list of servers and content, determines whether it is probable that it is going to be delivered asymmetrically or symmetrically. In this case it determines it will probably be delivered asymmetrically and therefore it amends the user request to become an amended user request URtc which has as its source address the IP address of the cache 10. This request is routed via service router 20 to service router 26 across peering point 42 to the internet 40 and then to origin server 30. Origin server 30 responds by transmitting a response which will include content back to the IP address of the cache 10 - contenttc. It also responds to the user request received directly from the user to transmit a response and content back to the user. Thus, a response is transmitted from the origin server to both the transparent cache and to the user in this case. The content that is received at the transparent cache is stored and the transparent cache can serve future requests with this content. In this particular example, the user has already received a response from the origin server 30 and has set up a session for receiving the content. The cache did not attempt to deliver the content to the user 17 in this example.

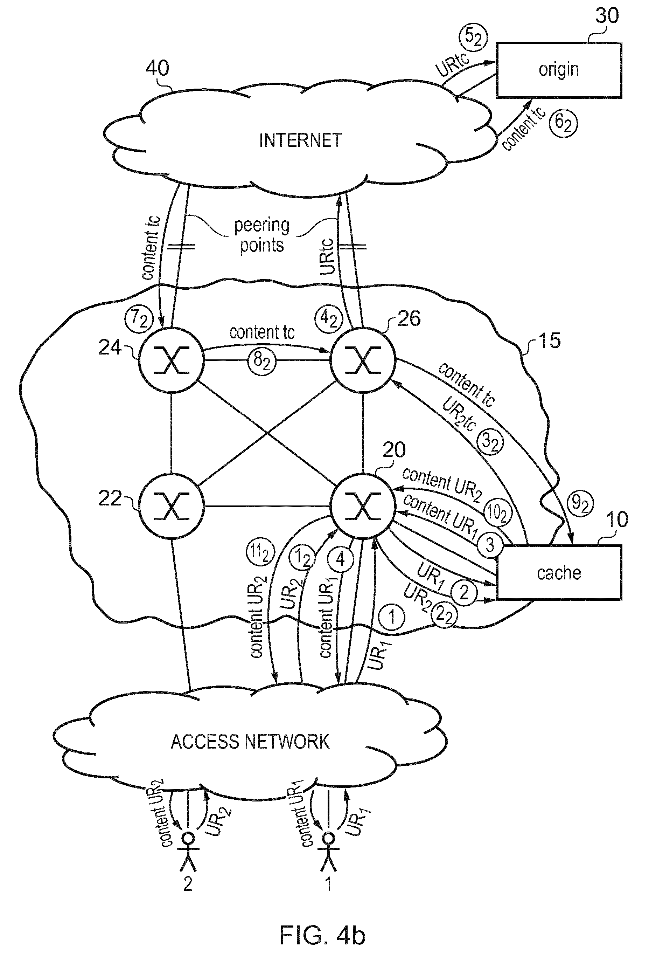

Figure 4b shows an alternative example where a plurality of users access a local network 15 via an access network 18. In this example, user 1 sends a user request UR1, via access network 18, to local network 15 where it is received at service router 20. Service router 20 is programmed to divert requests to cache 10 and, thus, the user request UR1 is diverted to cache 10. In this case, cache 10 determines that it is storing the content and therefore it responds to the user request with the content and the response - content UR1 is transmitted back, via service router 20, to user 1. In this embodiment service router 22 is not configured to divert requests or content to cache 10 and thus, any content or requests that are sent asymmetrically through this router 22 and not via service router 20 will not arrive at cache 10.

At a similar time, user 2 sends a request UR2 for content, via service router 20, where it is intercepted and diverted to cache 10. Cache 10 receives the request UR2 and determines that it is not currently storing the requested content. It therefore needs to request the content and it determines whether or not the routing of content for this request will be symmetric or asymmetric. In this case, it determines this by monitoring ingress and egress traffic to that origin server and determining a mismatch between requests and responses. If it does not get the responses it expects to requests to the origin server, it knows that the routing is asymmetric and therefore it switches to semi-transparent mode and requests the content for user 2 using its own IP address. Thus, an amended set of requests UR2tc are transmitted via service router 26 to origin server 30. Origin server 30 responds to the requests by transmitting a response and the content - contenttc, and, as the source address was the IP address of cache 10, the content is transmitted to the cache 10 even though the routing may not be symmetric such that it may come back via different service routers. These alternative routes are shown as content 7₂ and 8₂. The content is received at cache 10 which stores it and then delivers the content via access network 18 to user 2. In this embodiment, the service routers divert the requests and do not mirror them and, thus, the only request received for the content at the origin is the request sent from the cache 10.

In the case that symmetric routing occurs (e.g. the content follows the user request route through service router 20), then the cache 10 can transmit the content request as a spoofed content request that appears to come from the user, while in the case that asymmetric routing occurs then it would be a content request amended to come from the cache itself denoted as URtc. In the case of the spoofed request the content would return via the service router 20 that intercepted the request and would itself be intercepted and transmitted to the cache.

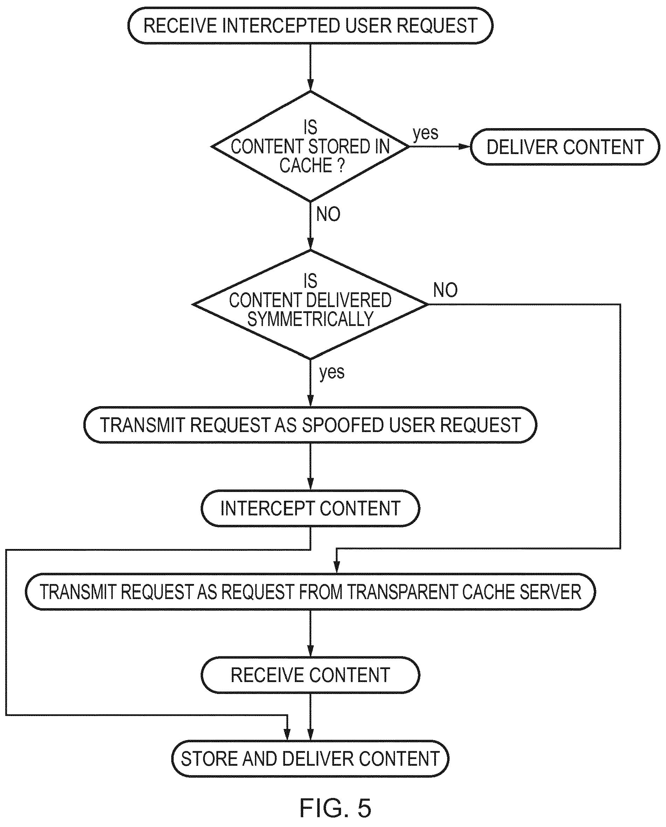

Figure 5 shows a flow diagram illustrating steps in a method according to an embodiment of the present invention. In this method, an intercepted user request is received at the cache and it is determined if the content is stored in the cache. If it is, then the content is delivered to the user. If it is not, then the cache determines whether or not the content would be delivered symmetrically. It may do this from a knowledge of the delivery routes for various servers for various contents, or it may determine it by transmitting requests to that server for that content and determining whether it gets responses to all the requests. If it determines that the content is to be delivered symmetrically then it will transmit the request for the content as a spoofed user request to the origin server and when the origin server responds to that user request by transmitting the content towards the user it will intercept that content which can then be stored and delivered.

If the content was determined to be delivered asymmetrically then it will transmit a request for that content as a request from the cache server itself. In this way, the content will be directed to the cache server and it is therefore immaterial which route it takes. The cache server will then receive this content and it will store and deliver it to the user.

Steps in an alternative method for delivering content are steps set out below.

In step 1, the cache monitors ingress and egress traffic and detects any mismatch between requests and responses which indicate asymmetric routing.

In step 2, the cache determines that the content is cacheable and makes the decision to acquire the content.

In step 3 the cache sees a new request for the same content and switches to semi-transparent mode for the content flow, substituting the user IP address with its own IP address. The content is then delivered to the cache and a new request for the same content is served from the cache.

In step 4, the cache continues to operate in fully transparent mode for other content requests if:
- the content is not deemed cacheable;
- routing asymmetry has not been detected for cacheable content or for the origin location.

A person of skill in the art would readily recognize that steps of various above-described methods can be performed by programmed computers. Herein, some embodiments are also intended to cover program cache servers, e.g., digital data storage media, which are machine or computer readable and encode machine-executable or computer-executable programs of instructions, wherein said instructions perform some or all of the steps of said above-described methods. The program cache servers may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of delivering content to a user (1, 2, 17), comprising the steps of:
receiving at a cache server (10) an intercepted request from said user for content, said request being directed to an origin server (30);
determining if said content is currently stored at said cache server (10) and if so delivering said content, and if not requesting said content from said origin server (30);
said step of requesting said content from said origin server (30) comprising:
determining whether said content from said origin will be delivered symmetrically via a same route as said request was received via or asymmetrically at least partially via a different route from a route said request was received via; and
if it is determined that said content from said origin server (30) will be delivered asymmetrically:
amending said request such that a source of said request is indicated to be said cache server (10), and transmitting said amended request to said origin server (30); or
if it is determined that said content from said origin will be delivered symmetrically:
transmitting said request to said origin server (30) with said source of said request indicated as being said user (1, 2, 17).

2. A method according to claim 1, wherein said step of determining whether said content from said origin is delivered symmetrically or asymmetrically, comprises transmitting said received request to said origin server and in response to not receiving at least some of said content as intercepted content at said cache server determining that said content is delivered asymmetrically.

3. A method according to claim 1, wherein said step of determining whether said content from said origin is delivered symmetrically or asymmetrically, is determined in dependence upon at least one of said content and said origin server.

4. A method according to claim 3, wherein said step of determining whether said content from said origin is delivered symmetrically or asymmetrically, comprises comparing a characteristic of said origin server with a plurality of origin server characteristics stored on said cache server.

5. A method according to any preceding claim, comprising an initial step of:
intercepting said user request directed to said origin server;
determining whether said user request is to an origin server that serves static content; and if so
routing said user request to said cache server

6. A method according to any preceding claim, comprising the further step of prior to requesting said content from said origin server, determining if said content of said request is content to be stored in said cache server and if it is, performing said steps of requesting said content from said origin server, and if it is not, not performing said requesting steps.

7. A method according to any one of claims 1 to 5, comprising the further steps of:
receiving said content either as intercepted responses to said request directed to said user or as a response to said request directed to said cache server;
determining whether said content is popular content and if so storing said content; and
transmitting said content to said user.

8. A method according to any preceding claim, wherein said user and said cache server are connected via a local network and said origin server is located outside of said local network.

9. A computer program product which when executed by a computer controls said computer to perform the steps of a method according to any one of claims 1 to 8.

10. A cache server (10) for storing content to be delivered to a user, said cache server (10) comprising:
data storage circuitry for storing content to be delivered to said user;
an input for receiving intercepted requests from a user for content, said requests being directed to an origin server (30);
determining logic configured to determine whether said content to said origin server will be delivered symmetrically via a same route as said request was received via or asymmetrically at least partially via a different route from a route said request was received via; and
requesting logic configured to request said content from said origin server by:
amending said request such that a source of said request is indicated to be said cache server, and transmitting said amended request to said origin server, if said determining logic has determined that said content from said origin server will be delivered asymmetrically: or by
transmitting said request to said origin server with said source of said request indicated as being said user if said determining logic has determined that said content from said origin server will be delivered symmetrically.

11. A cache server according to claim 10, said cache server comprising caching logic configured to determine whether content requested is content that should be stored in said cache server and if not said cache server is configured to discard said request and not to transmit said request further.

12. A cache server according to claim 10 or 11, wherein said determining logic is configured to transmit said received intercepted requests to said origin server and in response to not receiving at least some of said content at said cache server to determine that said content from said origin server is delivered asymmetrically.

13. A cache server according to claim 10 or 11, wherein said determining logic is configured to determine whether said content form said origin server is delivered symmetrically or asymmetrically in dependence upon at least one of said content and said origin server.

14. A cache server according to any one of claims 10 to 13, comprising storage logic configured to determine in response to receipt of said request whether said content is currently stored and if so to deliver said content to said user and not to transmit said request further.

15. A content delivery network comprising a network (15) for connecting at least one user (1, 2, 17) with a further network (40) providing access to a plurality of origin servers (30), said content delivery network comprising:
at least one router (20, 22, 24, 26) for routing requests received from said at least one user (1, 2, 17) to said further network (40); and
a cache server (10) according to any one of claims 10 to 12, for storing content; wherein
at least one of said at least one routers (20) is configured to receive requests for content from said at least one user (1, 2, 17) and to route at least some of said requests to said cache server (10), and to receive content directed to said at least one user and to route at least some of said content to said cache server (10).

## Patentansprüche

1. Verfahren für das Liefern von Inhalt an einen Benutzer (1, 2, 17), die folgenden Schritte umfassend:
das Empfangen einer abgefangenen Anfrage von besagtem Benutzerinhalt durch einen Cache-Server (10), wobei besagte Anfrage an einen Quellserver (30) gerichtet ist;
das Bestimmen, ob besagter Inhalt gegenwärtig auf besagtem Cache-Server (10) gespeichert ist und wenn dem so ist, das Liefern besagten Inhalts, und wenn dem nicht so ist, das Abrufen besagten Inhalts von besagtem Quellserver (30);
wobei besagter Schritt des Abrufens besagten Inhalts von besagtem Quellserver (30) umfasst:
das Bestimmen, ob besagter Inhalt von besagter Quelle symmetrisch über dieselbe Route wie diejenige geliefert wird, auf welcher besagte Anfrage empfangen wurde, oder zumindest teilweise asymmetrisch über eine andere Route als die Route, auf welcher besagte Anfrage empfangen wurde; und
wenn bestimmt wird, dass besagter Inhalt von besagtem Quellserver (30) asymmetrisch geliefert wird:
das dergestaltige Abändern besagter Anfrage, dass besagtem Cache-Server (10) eine Quelle besagter Anfrage angegeben wird, und das Übermitteln besagter abgeänderter Anfrage an besagten Quellserver (30); oder
wenn bestimmt wird, dass besagter Inhalt von besagtem Quellserver (30) symmetrisch geliefert wird:
das Übermitteln besagter Anfrage an besagten Quellserver (30), wobei besagte Quellenangabe zu besagter Anfrage den besagten Benutzer (1, 2, 17) als Quelle ausweist.

2. Verfahren nach Anspruch 1, wobei besagter Schritt des Bestimmens, ob besagter Inhalt besagten Ursprungs symmetrisch oder asymmetrisch geliefert wird, das Übermitteln besagter empfangener Anfrage an besagten Quellserver umfasst sowie dann, wenn nicht mindestens ein Teil besagten Inhalts als abgefangener Inhalt bei besagtem Cache-Server empfangen wird, als Reaktion das Festlegen, dass besagter Inhalt asymmetrisch geliefert wird.

3. Verfahren nach Anspruch 1, wobei besagter Schritt des Bestimmens, ob besagter Inhalt besagten Ursprungs symmetrisch oder asymmetrisch geliefert wird, in Abhängigkeit mindestens entweder von besagtem Inhalt oder von besagtem Quellserver erfolgt.

4. Verfahren nach Anspruch 3, wobei besagter Schritt des Bestimmens, ob besagter Inhalt besagten Quellservers symmetrisch oder asymmetrisch geliefert wird, den Vergleich der Charakteristik besagten Quellservers mit einer Vielzahl von Quellserver-Charakteristiken umfasst, die auf besagtem Cache-Server gespeichert sind.

5. Verfahren nach einem beliebigen der vorstehenden Ansprüche, den folgenden ersten Schritt umfassend:
das Abfangen besagter Benutzeranfrage an besagten Quellserver;
das Bestimmen, ob besagte Benutzeranfrage an einen Quellserver gerichtet ist, der statischen Inhalt liefert; und wenn dem so ist
das Routen besagter Benutzeranfrage an besagten Quellserver;

6. Verfahren nach einem jeglichen der vorgenannten Ansprüche, den weiteren Schritt vor dem Anfordern besagten Inhalts von besagtem Quellserver umfassend, zu bestimmen, ob besagter Inhalt besagter Anfrage solcher Inhalt ist, der auf besagtem Cache-Server zu speichern ist, und wenn dem so ist, das Ausführen besagter Schritte des Abrufens besagten Inhalts von besagtem Quellserver, und wenn dem nicht so ist, das Unterlassen des Ausführens besagter Schritte des Abrufens.

7. Verfahren nach einem beliebigen der Ansprüche 1 bis 5, weiterhin die folgenden Schritte umfassend:
das Empfangen besagten Inhalts entweder als abgefangene Antworten auf besagte, an besagten Benutzer gerichtete Anfrage oder als Antwort auf besagte, an besagten Cache-Server gerichtete Anfrage;
das Bestimmen, ob besagter Inhalt ein beliebter Inhalt ist, und wenn dem so ist, das Speichern besagten Inhalts; und
das Übermitteln besagten Inhalts an den Benutzer.

8. Verfahren nach einem jeglichen der vorgenannten Ansprüche, wobei besagter Benutzer und besagter Cache-Server über ein lokales Netzwerk verbunden sind und besagter Quellserver sich außerhalb besagten lokalen Netzwerks befindet.

9. Computerprogramm-Produkt, welches bei dessen Ausführen auf einem Computer besagten Computer steuert, um alle Schritte eins Verfahrens gemäß einem beliebigen der Ansprüche 1 bis 8 auszuführen.

10. Cache-Server (10) zum Speichern von Inhalt, der an einen Benutzer zu liefern ist, wobei besagter Cache-Server (10) umfasst:
Datenspeicherschaltungen für das Speichern von an besagten Benutzer zu lieferndem Inhalt;
einen Eingang für den Empfang abgefangener Benutzeranfragen nach Inhalt, wobei besagte Anfrage an einen Quellserver (30) gerichtet ist;
eine Bestimmungslogik, die konfiguriert ist für das Bestimmen, ob besagter Inhalt für besagten Quellserver symmetrisch über dieselbe Route wie diejenige geliefert wird, auf welcher besagte Anfrage empfangen wurde, oder zumindest teilweise asymmetrisch über eine andere Route als die Route, auf welcher besagte Anfrage empfangen wurde; und
eine Anfragelogik, die konfiguriert ist für das Anfordern besagten Inhalts von besagtem Quellserver durch folgende Schritte:
das dergestaltige Abändern besagter Anfrage, dass besagtem Cache-Server eine Quelle besagter Anfrage angegeben wird, und das Übermitteln besagter abgeänderter Anfrage an besagten Quellserver, wenn besagte Bestimmungslogik bestimmt hat, dass besagter Inhalt von besagtem Quellserver asymmetrisch geliefert wird; oder durch folgende Schritte:
das dann erfolgende Übermitteln besagter Anfrage an besagten Quellserver wobei besagte Quellenangabe zu besagter Anfrage den besagten Benutzer als Quelle ausweist, wenn besagte Bestimmungslogik bestimmt hat, dass besagter Inhalt von besagtem Quellserver symmetrisch geliefert wird.

11. Cache-Server nach Anspruch 10, wobei besagter Cache-Server eine Caching-Logik umfasst, die konfiguriert ist für das Bestimmen, ob angeforderter Inhalt ein Inhalt ist, der auf besagtem Cache-Server zu speichern wäre, wobei besagter Cache-Server dann, wenn dies nicht der Fall ist, dafür konfiguriert ist, besagte Anfrage zu verwerfen und besagte Anfrage nicht weiterzuleiten.

12. Cache-Server nach Anspruch 10 oder 11, wobei besagte Bestimmungslogik konfiguriert ist für das Übermitteln besagter abgefangener Anfragen an besagten Quellserver und dann, wenn nicht zumindest ein Teil besagten Inhalts von besagtem Cache-Server empfangen wird, als Reaktion für das Bestimmen, dass besagter Inhalt von besagtem Quellserver asymmetrisch geliefert wird.

13. Cache-Server nach Anspruch 10 oder 11, wobei besagter Bestimmungslogik konfiguriert ist für das Bestimmen, ob besagter Inhalt besagten Quellservers symmetrisch oder asymmetrisch geliefert wird, was in Abhängigkeit mindestens entweder von besagtem Inhalt oder von besagtem Quellserver erfolgt.

14. Verfahren nach einem beliebigen der Ansprüche 10 bis 13, eine Speicherlogik umfassend, die dafür konfiguriert ist, um in Reaktion auf den Empfang besagter Anfrage zu bestimmen, ob besagter Inhalt gegenwärtig gespeichert ist, und wenn dem so ist, besagten Inhalt an besagten Benutzer zu liefern und besagte Anfrage nicht weiterzuleiten.

15. Inhaltbereitstellungsnetzwerk, ein Netzwerk (15) für das Verbinden mindestens eines Benutzers (1, 2, 17) mit einem weiteren Netzwerk (40), welches Zugang zu einer Vielzahl von Quellservern (30) bietet, wobei besagtes Inhaltbereitstellungsnetzwerk umfasst:
mindestens einen Router (20, 22, 24, 26) für das Routen von Anfragen, die von besagtem, mindestens einem Benutzer (1, 2, 17) empfangen werden, an besagtes weiteres Netzwerk (40); und
einen Cache-Server (10) nach einem beliebigen der Ansprüche 10 bis 12 für das Speichern von Inhalten; wobei
mindestens einer der mehreren Router oder des mindestens einen Routers (20) konfiguriert ist für dem Empfang von Anfragen nach Inhalt von besagtem, mindestens einem Benutzer (1, 2, 17) und für das Routen mindestens einiger der besagten Anfragen an besagten Cache-Server (10) sowie für das Empfangen von Inhalt, der für besagten mindestens einen Benutzer bestimmt ist und für das Routen besagter einiger der besagten Inhalte an besagten Cache-Server (10).

## Revendications

1. Procédé pour délivrer du contenu à un utilisateur (1, 2, 17), comprenant les étapes suivantes :
recevoir, au niveau d'un serveur à cache (10), une demande interceptée provenant dudit utilisateur pour un contenu, ladite demande étant adressée à un serveur d'origine (30) ;
déterminer si ledit contenu est actuellement stocké au niveau dudit serveur à cache (10) et, dans l'affirmative, délivrer ledit contenu et, si tel n'est pas le cas, demander ledit contenu de la part dudit serveur d'origine (30) ;
ladite demande dudit contenu de la part dudit serveur d'origine (30) comprenant les étapes suivantes :
déterminer si ledit contenu de ladite origine sera délivré de manière symétrique par le biais du même trajet que celui par le biais duquel a été reçue ladite demande ou de manière asymétrique au moins partiellement par le biais d'un trajet différent de celui par le biais duquel a été reçue ladite demande ; et
s'il est déterminé que ledit contenu dudit serveur d'origine (30) sera délivré de manière asymétrique :
modifier ladite demande de sorte qu'une source de ladite demande est indiquée être ledit serveur à cache (10), et transmettre ladite demande modifiée audit serveur d'origine (30) ; ou
s'il est déterminé que ledit contenu de ladite origine sera délivré de manière symétrique :
transmettre ladite demande audit serveur d'origine (30) avec ladite source de ladite demande indiquée comme étant ledit utilisateur (1, 2, 17).

2. Procédé selon la revendication 1, dans lequel ladite étape consistant à déterminer si ledit contenu de ladite origine est délivré de manière symétrique ou asymétrique comprend la transmission de ladite demande reçue audit serveur d'origine et, en réponse à la non-réception d'au moins une partie dudit contenu sous la forme de contenu intercepté au niveau du serveur à cache, la détermination que ledit contenu est délivré de manière asymétrique.

3. Procédé selon la revendication 1, dans lequel ladite étape consistant à déterminer si ledit contenu de ladite origine est délivré de manière symétrique ou asymétrique est déterminée en fonction d'au moins l'un parmi ledit contenu et ledit serveur d'origine.

4. Procédé selon la revendication 3, dans lequel ladite étape consistant à déterminer si ledit contenu de ladite origine est délivré de manière symétrique ou asymétrique comprend la comparaison d'une caractéristique dudit serveur d'origine avec une pluralité de caractéristiques de serveur d'origine stockées sur ledit serveur à cache.

5. Procédé selon l'une quelconque des revendications précédentes, comprenant une étape initiale de :
intercepter ladite demande d'utilisateur adressée audit serveur d`origine ;
déterminer si ladite demande d'utilisateur est adressée à un serveur d'origine qui délivre un contenu statique ; et, dans l'affirmative,
acheminer ladite demande d'utilisateur audit serveur à cache.

6. Procédé selon l'une quelconque des revendications précédentes, comprenant l'étape supplémentaire consistant, avant la demande dudit contenu auprès dudit serveur d'origine, à déterminer si ledit contenu de ladite demande est un contenu à stocker dans ledit serveur à cache et, s'il l'est, exécuter lesdites étapes de demander ledit contenu auprès dudit serveur d'origine et, s'il ne l'est pas, ne pas exécuter lesdites étapes.

7. Procédé selon l'une quelconque des revendications 1 à 5, comprenant les étapes supplémentaires suivantes :
recevoir ledit contenu soit sous la forme d'une réponse interceptée à ladite demande adressée audit utilisateur, soit sous la forme d'une réponse à ladite demande adressée audit serveur à cache ;
déterminer si ledit contenu est un contenu très demandé et, dans l'affirmative, stocker ledit contenu ; et
transmettre ledit contenu audit utilisateur.

8. Procédé selon l'une quelconque des revendications précédentes, ledit utilisateur et ledit serveur à cache étant connectés par le biais d'un réseau local et ledit serveur d'origine se trouvant en-dehors dudit réseau local.

9. Produit programme d'ordinateur qui, lorsqu'il est exécuté par un ordinateur commande ledit ordinateur pour exécuter les étapes d'un procédé selon l'une quelconque des revendications 1 à 8.

10. Serveur à cache (10) destiné à stocker un contenu à délivrer à un utilisateur, ledit serveur à cache (10) comprenant :
un circuit de stockage de données destiné à stocker un contenu à délivrer audit utilisateur ;
une entrée destinée à recevoir des demandes interceptées provenant d'un utilisateur pour un contenu, lesdites demandes étant adressées à un serveur d'origine (30) ;
une logique de détermination configurée pour déterminer si ledit contenu audit serveur d'origine sera délivré de manière symétrique par le biais d'un même trajet que celui par le biais duquel a été reçue ladite demande ou de manière asymétrique au moins partiellement par le biais d'un trajet différent de celui par le biais duquel a été reçue ladite demande ; et
une logique de demande configurée pour demander ledit contenu de la part dudit serveur d'origine en :
modifiant ladite demande de sorte qu'une source de ladite demande est indiquée être ledit serveur à cache, et transmettant ladite demande modifiée audit serveur d'origine (30) si ladite logique de détermination a déterminé que ledit contenu dudit serveur d'origine sera délivré de manière asymétrique ; ou en
transmettant ladite demande audit serveur d'origine avec ladite source de ladite demande indiquée comme étant ledit utilisateur si ladite logique de détermination a déterminé que ledit contenu dudit serveur d'origine sera délivré de manière symétrique.

11. Serveur à cache selon la revendication 10, ledit serveur à cache comprenant une logique de mise en cache configurée pour déterminer si le contenu demandé est un contenu qu'il convient de stocker dans ledit serveur à cache et, si tel n'est pas le cas, ledit serveur à cache est configuré pour écarter ladite demande et ne pas transmettre ladite demande plus loin.

12. Serveur à cache selon la revendication 10 ou 11, ladite logique de détermination étant configurée pour transmettre lesdites demandes interceptées audit serveur d'origine et, en réponse à la non-réception d'au moins une partie dudit contenu au niveau du serveur à cache, pour déterminer que ledit contenu provenant dudit serveur d'origine est délivré de manière asymétrique.

13. Serveur à cache selon la revendication 10 ou 11, ladite logique de détermination étant configurée pour déterminer si ledit contenu dudit serveur d'origine est délivré de manière symétrique ou asymétrique en fonction d'au moins l'un parmi ledit contenu et ledit serveur d'origine.

14. Serveur à cache selon l'une quelconque des revendications 10 à 13, comprenant une logique de stockage configurée pour déterminer, en réponse à la réception de ladite demande, si ledit contenu est actuellement stocké et, dans l'affirmative, pour délivrer ledit contenu audit utilisateur et ne pas transmettre ladite demande plus loin.

15. Réseau de délivrance de contenu comprenant un réseau (15) destiné à connecter au moins un utilisateur (1, 2, 17) à un réseau supplémentaire (40) fournissant l'accès à une pluralité de serveurs d'origine (30), ledit réseau de délivrance de contenu comprenant :
au moins un routeur (20, 22, 24, 26) destiné à acheminer des demandes reçues de la part dudit au moins un utilisateur (1, 2, 17) audit réseau supplémentaire (40) ;
un serveur à cache (10) selon l'une quelconque des revendications 10 à 12, destiné à stocker du contenu ;
au moins l'un desdits au moins un routeur (20) étant configuré pour recevoir des demandes de contenu de la part dudit au moins un utilisateur (1, 2, 17) et pour acheminer au moins certaines desdites demandes audit serveur à cache (10), et pour recevoir le contenu adressé audit au moins un utilisateur et pour acheminer au moins une partie dudit contenu vers ledit serveur à cache (10).
